# EUROPÄISCHE PATENTSCHRIFT

(11) **EP 2 354 682 B1**
(45) Veröffentlichungstag und Bekanntmachung des Hinweises auf die Patenterteilung: **30.03.2016**
(21) Anmeldenummer: 11000233.4
(22) Anmeldetag: 13.01.2011
(51) Int. Cl.: G05D 23/19, F24D 19/10

(54) **Verfahren und Vorrichtung zum Einstellen einer Temperiereinrichtung**
Method and device for adjusting a tempering device
Procédé et dispositif destinés au réglage d'un dispositif de thermorégulation

(30) Priorität: 21.01.2010 DE 102010005275
(43) Veröffentlichungstag der Anmeldung: 10.08.2011
(73) Patentinhaber: Thermozyklus GmbH & Co. Kg, 82131 Gauting (DE)
(72) Erfinder: Kummerer, Christoph, Dr., 82131 Gauting (DE); Kummerer, Norbert, 85778 Haimhausen (DE)
(74) Vertreter: Prinz & Partner mbB

(56) Entgegenhaltungen:
- DE-A1- 10 312 825

## Beschreibung

Die Erfindung betrifft ein Verfahren zum Einstellen einer Temperiereinrichtung, insbesondere einer Warmwasserheizanlage, mit mehreren von einem Heiz-oder Kühlmittel durchströmten Wärmeübertragungsvorrichtungen. Die Erfindung betrifft ferner eine Vorrichtung zur Durchführung dieses Verfahrens.

Unter dem Begriff "Temperiereinrichtung" sollen hier allgemein eine Heiz-oder Kühlanlag verstanden werden. Im Folgenden werden die Verhältnisse vornehmlich für eine Warmwasserheizanlage mit einer zentralen Umwälzpumpe und mehreren als Wärmeübertragungsvorrichtungen dienenden Heizkörpern (Heizflächen) dargestellt. Für andere Anlagen mit einem strömendem Heiz- oder Kühlmittel gelten aber dieselben Überlegungen; anlagentypabhängige Abweichungen in der technischen Umsetzung sind für den Fachmann ohne weiteres ersichtlich.

In einer Warmwasserheizanlage fließt das als Heizmittel dienende Heizungswasser nach dem Prinzip des geringsten Widerstandes. Ohne besondere Vorkehrungen in der Heizanlage führt dieser Weg primär durch die der Umwälzpumpe nächstgelegenen Heizkörper; weiter entfernte Heizkörper werden nicht ausreichend versorgt. Zur Abhilfe wird nach weit verbreiteter Praxis eine stärkere Pumpe eingebaut und die Vorlauftemperatur erhöht. Die Folgen sind ein höherer Energieverbrauch, störende Strömungsgeräusche, teilweise überhitzte Räume und eine schlechte Regelbarkeit der Anlage.

Nur durch eine hydraulische Einregulierung, mit der für alle Heizkörper ähnliche Verhältnisse erzeugt werden, sind diese Probleme mit optimalem Energieeinsatz zu lösen. Die Vergabe- und Vertragsordnung für Bauleistungen (VOB) schreibt einen solchen hydraulischen Abgleich für jede Heizungsanlage vor (VOB/C DIN 18380). In der Praxis unterbleibt der hydraulische Abgleich allerdings sehr häufig oder wird nur schlecht durchgeführt, da er schwierig ist. Für jeden Raum müssen Auslegungs-Heizlast, Systemtemperaturen, Auslegung der Heizflächen, sowie der Auslegungs-Volumenstrom für die Heizkörper ermittelt werden. Dann muss eine Rohrnetzberechnung durchgeführt werden, um die Einstellwerte aller Regelarmaturen zu ermitteln. Schließlich müssen geeignete Armaturen eingebaut und entsprechend eingestellt werden. Bei Altbauten kommt oft erschwerend hinzu, dass die notwendigen Daten nur durch aufwändige Messungen an der vorhandenen Heizungsanlage zu gewinnen sind.

Aus der DE 103 12 825 A1 ist ein Verfahren zum Einstellen mehrerer parallel geschalteter Wärmetauscher bekannt, bei dem für jeden Wärmetauscher eine für den Wärmebedarf des Wärmetauschers spezifische Größe in einem vorbestimmten Zeitraum ermittelt wird. Die spezifischen Größen aller Wärmetauscher werden miteinander verglichen, und die Einstellung des Wärmetauschers mit der den geringsten Wärmebedarf anzeigenden spezifischen Größe wird so verändert, dass der Wärmebedarf vergrößert wird.

Aufgabe der Erfindung ist es, mit vertretbarem Aufwand eine verbesserte Einstellung einer Temperiereinrichtung zu ermöglichen.

Gelöst wird diese Aufgabe durch ein Verfahren mit den Merkmalen des Anspruchs 1 und durch eine Vorrichtung mit den Merkmalen des Anspruchs 10. Vorteilhafte Ausgestaltungen des erfindungsgemäßen Verfahrens bzw. der erfindungsgemäßen Vorrichtung sind in den zugehörigen Unteransprüchen angegeben.

Das erfindungsgemäße Verfahren zum Einstellen einer Temperiereinrichtung, insbesondere einer Warmwasserheizanlage, mit mehreren von einem Heiz- oder Kühlmittel durchströmten Wärmeübertragungsvorrichtungen (Wärmeabgabe- bzw. Wärmeaufnahmevorrichtungen), umfasst folgende Schritte:
- Ermitteln eines Heiz- bzw. Kühlmittel-Volumenstromwertes für jede Wärmeübertragungsvorrichtung mit der Vorgabe, dass jedes zu temperierende Objekt die gleiche spezifische Energiezufuhr erfahren soll; und
- Einstellen der Volumenströme auf die ermittelten Werte,
wobei die Heiz- bzw. Kühlmittel-Volumenstromwerte aus Informationen berechnet werden, die auf einem thermozyklischen Regelverfahren basieren, bei dem für jede Wärmeübertragungsvorrichtung das Verhältnis von Pulsdauern, in denen das Objekt temperiert wird, zu Pausendauern, in denen nicht temperiert wird, als Maß für den Energiebedarf des Objekts berücksichtigt wird.

Ein "zu temperierendes Objekt" ist im Falle einer Warmwasserheizanlage in der Regel ein Raum mit wenigstens einer darin angeordneten Wärmeübertragungsvorrichtung in Form eines Heizkörpers. Ein Objekt kann aber auch ein Gegenstand, Gas, oder eine Flüssigkeit sein, der mit einer oder mehreren Temperiereinrichtungen temperiert wird. Im Falle einer Kühlanlage nimmt die Wärmeübertragungsvorrichtung Wärme auf, und die Energiezufuhr hat ein negatives Vorzeichen.

Die Erfindung beruht auf der Erkenntnis, dass mit einem automatisch durchführbaren hydraulischen Abgleich einschließlich der obigen Verfahrensmerkmale die eingangs genannten Nachteile vermieden werden können, ohne dass hierfür mühsame Datenermittlungen, Berechnungen und Einstellungen erforderlich sind.

Gegenstand der Erfindung ist auch eine Vorrichtung zur Durchführung des erfindungsgemäßen Verfahrens, umfassend:
- eine Temperiereinrichtung, mit
   - einer Wärmequelle bzw. Wärmesenke, und
   - mehreren von einem Heiz- oder Kühlmittel durchströmten Wärmeübertragungsvorrichtungen, wobei für jede Wärmeübertragungsvorrichtung ein Ventil oder eine Drosselvorrichtung vorgesehen ist, das bzw. die den Zufluss des Heiz- oder Kühlmittels beeinflusst; sowie
- eine zentrale Auswerte- und Steuereinheit, mithilfe derer die Ventile bzw.

Drosselvorrichtungen auf die ermittelten Volumenstromwerte eingestellt werden.

Die Erfindung wird nachfolgend unter Bezugnahme auf die beigefügten Zeichnungen näher erläutert. In den Zeichnungen zeigen:
- Figur 1 ein Diagramm, in dem der Verlauf der Ist-Temperatur gegen die Zeit bei thermozyklischer Regelung eines Heizsystems, sowie die Dauer, für die das Heizsystem eingeschaltet wird, eingetragen sind;
- Figur 2 die prinzipielle Anordnung einer zur Beheizung eines Raumes dienenden Temperiereinrichtung, die mittels eines thermozyklischen Regelverfahrens geregelt wird; und
- Figur 3 den prinzipiellen Aufbau einer thermozyklischen Regelvorrichtung mit einer zentralen Auswerte- und Steuereinheit.

Theoretisch ist ein hydraulischer Abgleich erreicht, wenn alle parallelen Wärmeübertragungsvorrichtungen (bei einer Warmwasserheizanlage also alle Heizkörper in einem Heizkreis) jeweils den gleichen hydraulischen Widerstand für das Heizmittel aufweisen. Praktisch wäre dies jedoch nur bei gleichbleibenden Bedingungen möglich, insbesondere dürften Heizkörper nicht geschlossen werden. Deshalb erfolgt der hydraulische Abgleich in der Praxis für den kritischsten Zustand, d. h. bei der maximalen Heizlast, bei der alle Heizkörper durchströmt werden.

Sind alle Heizkörper gleich, dann stellt der hydraulische Abgleich sicher, dass jeder Heizkörper eines Heizkreises mit der gleichen Energiemenge versorgt wird; denn die zum Heizkörper transportierte Energie ist proportional zur Temperatur des Heizmittels und zum Volumenstrom.

Nun sind aber in der Praxis selten alle Heizkörper gleich, weil ihre Auswahl oft ästhetische Kriterien und bauliche Gegebenheiten berücksichtigen muss. Außerdem muss die Art und/oder die Anzahl der Heizkörper auf den zu beheizenden Raum und seine Lage abgestimmt werden. Ein großer Raum im Norden wird mehr oder größere Heizkörper benötigen, als ein kleiner Raum im Süden. Nur wenn Art und Anzahl der Heizkörper genau passend für den Wärmebedarf des Raumes ausgewählt wurden, werden sich bei gleicher Energiezufuhr gleiche thermische Verhältnisse im Raum einstellen; denn die Abgabe der zugeführten Energie in den Raum und die damit erreichbare Raumtemperatur hängen entscheidend von den örtlichen Verhältnissen im Raum ab (Wärmekapazität, Wärmeverluste, Wärmegewinne). Um auf die gleiche Raumtemperatur zu kommen, wird ein gut isolierter Raum wesentlich weniger Energie benötigen, als ein schlecht isolierter.

Diese Zusammenhänge werden bei der Auslegung der Heizkörper für einen Raum so weit wie möglich berücksichtigt. Da Heizkörper als industriell gefertigte Produkte aber nicht beliebig genau auf einen individuellen Raum zugeschnitten werden können, werden sich gleiche thermische Verhältnisse in unterschiedlichen Räumen nur in grober Näherung einstellen. Deshalb ist es nicht optimal, alle Heizkörper auf genau gleiche Volumenströme abzugleichen.

Besser ist es, die Volumenströme gemäß der Erfindung so einzustellen, dass jeder Raum genau die Energiemenge bekommt, die er benötigt, um die gleiche Temperatur wie die anderen Räume (z. B. 20°C) zu erreichen und zu halten. Die Energiezufuhr sollte also vom Wärmebedarf des Raumes abhängig gemacht werden. Sie wird im Folgenden "spezifische Energiezufuhr" genannt. Um hydraulisch optimal abzugleichen, werden die Volumenströme also so eingestellt, dass die spezifische Energiezufuhr für jeden Raum möglichst gleich ist.

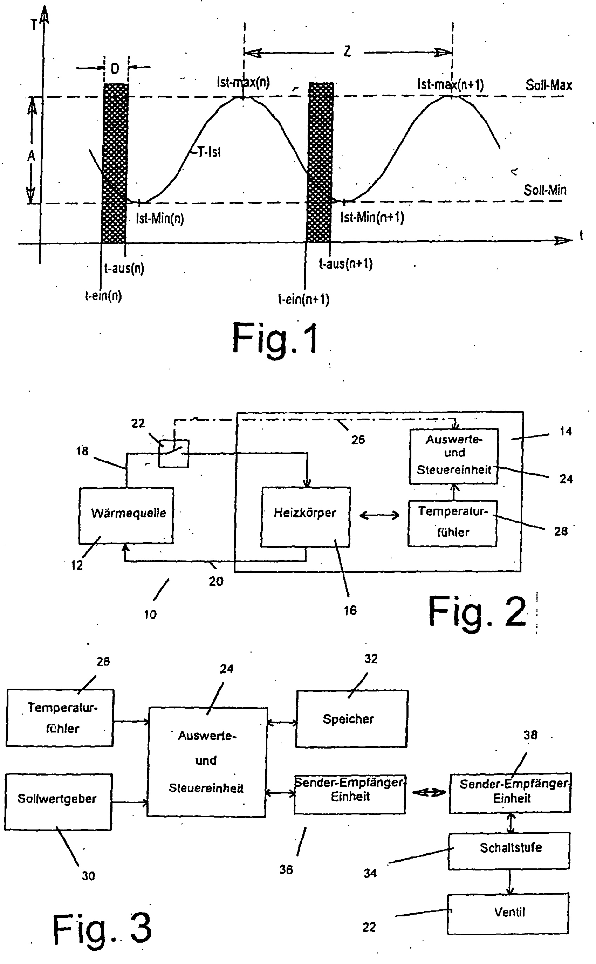

Praktisch durchführen lässt sich ein solcher hydraulischer Abgleich sehr vorteilhaft mithilfe von Informationen, die bei Anwendung eines besonderen thermozyklischen Regelverfahrens gewonnen werden. Ein solches thermozyklisches Regelverfahren ist aus der EP 0 935 181 B1 bekannt und wird nachfolgend für ein besseres Verständnis der darauf aufbauenden vorliegenden Erfindung unter Bezugnahme auf Figur 1 in seinen Grundzügen erläutert.

Das thermozyklische Regelverfahren gemäß EP 0 935 181 B1 beruht auf dem Grundgedanken, dass die Temperatur eines zu beheizenden oder zu kühlenden Raumes, Gegenstands, Gas oder einer Flüssigkeit aufgrund der Trägheit des Heiz-oder Kühlsystems und der Umgebungsverluste immer Schwingungen um den eigentlich gewünschten Sollwert ausführen wird. Während bei Heizanlagen mit einfachen Thermostaten nur ein Sollwert vorgegeben wird, bei dessen Überschreiten die Heizung ausgeschaltet und bei dessen Unterschreiten die Heizung eingeschaltet wird, werden bei dem thermozyklischen Regelverfahren zwei Sollwerte vorgegeben, die die maximale Amplitude der Schwingungen um den letztendlich gewünschten Temperaturwert markieren, wobei die Reaktion des Raumes, Gegenstands, Gas oder der Flüssigkeit auf ein Heizen oder Kühlen automatisch erfasst und beim nächsten Einschalten der Heiz- oder Kühlanlage berücksichtigt werden. Das thermozyklische Regelverfahren lernt also die zur optimalen Regelung der jeweiligen Temperiereinrichtung notwendigen Parameter selbst, ohne dass der Benutzer ihm diese vorgeben müsste. Stellt das thermozyklische Regelverfahren z. B. fest, dass ein Heizkörper nach dem Abschalten noch relativ viel Wärme an den zu beheizenden Raum abgibt, sodass die Ist-Temperatur die vorgegebene maximale Soll-Temperatur übersteigt, so wird der Heizkörper beim nächsten Heizzyklus entsprechend früher ausgeschaltet.

Das thermozyklische Regelverfahren basiert also auf der Grundüberlegung, dass Heizung und zu beheizender Raum ein System bilden, das sich zu Temperaturschwingungen anregen lässt. Aus der Art der Anregung und dem Temperaturverlauf, der sich als Antwort auf eine bestimmte Anregung einstellt, lassen sich laufend Informationen über das System und seinen aktuellen Zustand gewinnen. Diese Informationen reichen aus, um kontrollierte Temperaturschwingungen kleiner Amplitude um einen Sollwert (die gewünschte Temperatur für das Objekt) zu erzeugen, die diesem Sollwert beliebig nahe kommen. Dazu wird der Heizkörper periodisch und phasenrichtig jeweils so lange eingeschaltet, dass eine Temperaturschwingung mit definierten Minima und Maxima entsteht. Minima und Maxima liegen dabei um sehr kleine Beträge unter bzw. über dem Sollwert, der dadurch sehr genau angenähert wird. Abweichungen zwischen den erwarteten und den tatsächlich auftretenden Schwingungen benutzt das selbstlernende Regelverfahren zur Korrektur der Anregung, d. h. des Einschaltzeitpunktes und des Ausschaltzeitpunktes bzw. der Einschaltdauer des Heizkörpers. Das Verfahren testet also laufend das Verhalten des Systems und ermittelt aus dessen Reaktion die optimalen Ein- und Ausschaltzeitpunkte für den Heizkörper.

Ist die Temperatur des Heiz- oder Kühlmittels einstellbar, so kann das thermozyklische Regelverfahren vorteilhaft so durchgeführt werden, dass aus dem gemessenen Zeitabstand zwischen den Ein- und Ausschaltzeitpunkten der Temperiereinrichtung t-ein(n) und t-aus(n) (im folgenden Einschaltdauer D(n) genannt), sowie dem gemessenen Zeitabstand zwischen den lokalen Temperaturextremwerten Ist-Max(n-1) und Ist-Min(n), wenn die Temperiereinrichtung zum Heizen verwendet wird, bzw. dem gemessenen Zeitabstand zwischen den lokalen Temperaturextremwerten Ist-Min(n) und Ist-Max(n), wenn die Temperiereinrichtung zum Kühlen verwendet wird (im folgenden Halbzyklus HZ(n) genannt), die benötigte Differenz zwischen der Heiz- oder Kühlmitteltemperatur und der Ist-Temperatur (im folgenden Vorlauftemperatur VT genannt) ermittelt und eingestellt wird, mit den folgenden Schritten:
a) Falls die Einschaltdauer D(n) kleiner ist als der Halbzyklus HZ(n) multipliziert mit einem Faktor F, wird die Vorlauftemperatur VT um einen Bruchteil B erniedrigt und die Heiz-oder Kühlmitteltemperatur entsprechend verändert.
b) Falls die Einschaltdauer D(n) größer ist als der Halbzyklus HZ(n) multipliziert mit einem Faktor F, wird die Vorlauftemperatur VT um einen Bruchteil B erhöht und die Heiz-oder Kühlmitteltemperatur entsprechend verändert.
c) Der Ausschaltzeitpunkt t-aus(n+1) wird so neu festgelegt, dass die Einschaltdauer D(n+1) im Falle a) um den Bruchteil B verlängert und im Falle b) um den Bruchteil B verkürzt wird.

Diese Durchführungsform des Verfahrens erlaubt eine energetisch besonders günstige Kühlung bzw. Heizung, da das Kühlmittel nicht unnötig weit unter die gewünschte Temperatur gekühlt bzw. das Heizmittel nicht unnötig weit über die gewünschte Temperatur erhitzt werden muss, denn es wird umso mehr Energie unnötig aufgewandt, umso mehr Kühl- oder Heizmitteltemperatur und gewünschte Temperatur voneinander differieren.

Bei einer zweckmäßigen Alternative des thermozyklischen Regelverfahrens wird anstelle eines Halbzyklus HZ(n) der Zeitabstand zwischen den lokalen Maxima Ist-Max(n-1) und Ist-Max(n) gemessen (im folgenden Ganzzyklus GZ(n) genannt) und in dem im vorstehenden Absatz beschriebenen Verfahren dieser Ganzzyklus GZ(n) anstelle des Halbzyklus HZ(n) berücksichtigt.

Eine weitere zweckmäßige Alternative besteht darin, dass aus der fortlaufend ermittelten ersten Ableitung des Temperaturverlaufs nach der Zeit im beheizten oder gekühlten Raum, Gegenstand, Gas oder der Flüssigkeit die benötigte Differenz zwischen Heiz- oder Kühlmitteltemperatur und der Ist-Temperatur (im Folgenden Vorlauftemperatur VT genannt) ermittelt und eingestellt wird, mit den folgenden Schritten:
a) Bilden des arithmetischen Mittels aus den Beträgen der ermittelten ersten Ableitungen des Temperaturverlaufs nach der Zeit im Zeitraum zwischen den Temperaturextremwerten Ist-Max(n-1) und Ist-Min(n) (im folgenden Mittel(1) genannt) sowie im Zeitraum zwischen den Temperaturextremwerten Ist-Min(n) und Ist-Max(n) (im Folgenden Mittel(2) genannt).
b) Falls Mittel(1) kleiner ist als Mittel(2) multipliziert mit einem Faktor F, wird die Vorlauftemperatur VT um einen Bruchteil B erniedrigt und die Heiz- oder Kühlmitteltemperatur entsprechend verändert.
c) Falls Mittel(1) größer ist als Mittel(2) multipliziert mit einem Faktor F, wird die Vorlauftemperatur VT um einen Bruchteil B erhöht und die Heiz- oder Kühlmitteltemperatur entsprechend verändert.
d) Der Ausschaltzeitpunkt t-aus(n+1) wird so neu festgelegt, dass die Einschaltdauer D(n+1) im Falle b) um den Bruchteil B verlängert und im Falle c) um den Bruchteil B verkürzt wird.

Alternativ dazu kann auch statt des arithmetischen Mittels aus den ersten Ableitungen des Temperaturverlaufs nach der Zeit Mittel (1), ein fester Wert vorgegeben werden.

Das thermozyklische Regelverfahren kann schließlich vorteilhaft auch dann angewandt werden, wenn nicht die Heiz- oder Kühlmitteltemperatur, sondern die Heiz- oder Kühlleistung geregelt werden kann. Dies wird vor allem dann der Fall sein, wenn die Temperiereinrichtung mit elektrischem Strom betrieben wird. Das beschriebene thermozyklische Regelverfahren wird dazu mit der Modifikation angewandt, dass statt der Differenz zwischen Heiz- oder Kühlmitteltemperatur und der Ist-Temperatur (das ist die Vorlauftemperatur VT) jeweils die Heizleistung erhöht oder erniedrigt wird.

Aus den obigen Ausführungen ergibt sich, dass mithilfe des thermozyklischen Regelverfahrens für jeden Raum festgestellt werden kann, welche Differenz zwischen gewünschter Temperatur und Heizmitteltemperatur mindestens notwendig ist, um den Raum auf der gewünschten Temperatur zu halten.

Gemäß dem in EP 0 935 181 B1 beschriebenen thermozyklischen Regelverfahren werden diese Informationen dazu benutzt, um die minimal benötigte Vorlauftemperatur des Heizkreises zu ermitteln, an den die ausgewerteten Räume angeschlossen sind. Gemäß der Erfindung werden die gewonnenen Informationen aber dazu verwendet, den Volumenstrom des Heizmediums zu ermitteln, den jeder Raum im Verhältnis zu den anderen Räumen für eine spezifisch gleiche Energiezufuhr benötigt, wie nachfolgend verdeutlicht wird.

Das oben beschriebene thermozyklische Regelverfahren liefert für jeden Raum eine Kennzahl, die zur zugeführten Energie proportional ist. Dies lässt sich durch folgende Überlegung noch einmal veranschaulichen: das thermozyklische Regelverfahren schaltet den Heizkörper eines Raumes entweder ganz ein oder ganz aus und erzeugt so die gewünschten Mikroschwingungen. Für jeden Raum werden sich so bestimmte Pulsdauern ergeben, in denen geheizt wird, und Pausendauern, in denen nicht geheizt wird. Das Verhältnis von Pulsdauern zu Pausendauern ist dabei ein Maß für den Energiebedarf des Raumes.

Daraus lässt sich die Heizmitteltemperatur errechnen, die mindestens benötigt wird, um den Raum auf der gewünschten Temperatur zu halten. Man kann gemäß der Erfindung aber auch alle Kennzahlen eines Heizkreises zueinander ins Verhältnis setzen und feststellen, welche Heizkörper im Verhältnis zu den anderen Heizkörpern mit mehr oder weniger Energie versorgt werden. Es wird also für jedes Objekt ein auf einen Referenzwert bezogener, relativer Volumenstromwert ermittelt. Da die Energiezufuhr nicht nur der Heizmitteltemperatur, sondern auch dem Volumenstrom proportional ist, ergibt sich aus den Kennzahlen auch, welche Heizkörper im Verhältnis zu den anderen Heizkörpern größere oder kleinere Volumenströme aufweisen und in welchem Maße. Um hydraulisch abzugleichen, wird nun der Heizkörper mit dem größten Volumenstrom nicht begrenzt, wogegen der Volumenstrom bei allen anderen Heizkörpern aber entsprechend deren Kennzahl gedrosselt wird.

Diese Drosselung kann insbesondere auf folgende vier Arten praktisch realisiert werden:
1. Man lässt sich von einer zentralen Auswerte- und Steuereinheit (Mikroprozessorsystem), das die thermozyklische Regelung anwendet, die entsprechenden Kennzahlen ausgeben und stellt dann unabhängige Drosselvorrichtungen per Hand entsprechend ein, oder man gibt die Kennzahlen in ein unabhängiges Drosselsystem ein.
2. Man lässt von den Heizkörperventilen unabhängige Drosselvorrichtungen durch die zentrale Auswerte- und Steuereinheit automatisch einstellen, sofern diese über entsprechende unabhängige Stellantriebe verfügen.
3. Für die thermozyklische Regelung sind an sich einfache thermoelektrische Stellantriebe an den Heizkörperventilen ausreichend, die nur zwei Stellungen (Zu/Auf) kennen. Verwendet man stattdessen proportionale Stellantriebe, dann kann das Mikroprozessorsystem selbst im Rahmen des thermozyklischen Regelverfahrens die Kennzahlen dazu benutzen, die Stellantriebe nur jeweils soweit aufzufahren, wie dies der gewünschten Drosselung entspricht. In jedem Raum fährt der Stellantrieb also entweder "zu", oder "gedrosselt auf". Gesonderte Drosselarmaturen sind in diesem Fall entbehrlich.
4. Man kann die notwendigen Drosslungen schließlich auch durch eine Pulsweitenmodulation des Auf-Zustandes erreichen. Soll der Heizkörper z. B. um 70 % gedrosselt werden, wird das Ventil nicht für die volle vom thermozyklischen Regelverfahren errechnete Zeitdauer geöffnet, sondern nur für 70 % davon. Die Energiezufuhr in diesem verkürzten Zeitraum ist dieselbe wie während der vollen Zeitdauer bei 70 % Drosselung des Volumenstroms. Man kann dadurch wieder die oben genannten einfachen thermoelektrischen Stellantriebe verwenden.

In Figur 2 ist schematisch und beispielhaft eine in ihrer Gesamtheit mit 10 bezeichnete Vorrichtung mit einer Temperiereinrichtung gezeigt, die sowohl zur Durchführung des bekannten thermozyklischen Regelverfahrens als auch zur Durchführung des erfindungsgemäßen Verfahrens zum Einstellen der Temperiereinrichtung geeignet ist. Die Temperiereinrichtung umfasst im Wesentlichen eine Wärmequelle 12, z. B. einem Ölbrenner, und mehrere in den zu beheizenden Räumen 14 angeordnete Wärmeübertragungsvorrichtungen in Form von Heizkörpern 16 (der Einfachheit halber ist hier nur einer dargestellt). Wärmequelle 12 und Heizkörper 16 sind über Leitungen 18 und 20 für das Heizmittel, z. B. Wasser, verbunden, wobei das Heizmittel über die Leitung 18 (den sogenannten Vorlauf) dem Heizkörper 16 zugeführt wird, aus dem es über den sogenannten Rücklauf 20 wieder abfließt und zur erneuten Erwärmung zur Wärmequelle 12 gelangt. Im Vorlauf 18 ist ein Ventil 22 angeordnet, das im gezeigten Ausführungsbeispiel nur zwei Schaltzustände besitzt, nämlich entweder ganz geöffnet oder ganz geschlossen. Das Ventil wird mittels einer zentralen Auswerte- und Steuereinheit 24 gesteuert, welche entsprechende Steuersignale erzeugt und - wie durch die gestrichelte Linie 26 angedeutet - an das Ventil 22 überträgt. Zur Erfassung der Ist-Temperatur ist im Raum 14 ist ein Temperaturfühler 28 angeordnet, der mit der zentralen Auswerte- und Steuereinheit 24 gekoppelt ist und letztgenannter die gemessenen Temperaturwerte fortlaufend übermittelt.

In der Praxis wird die zentrale Auswerte- und Steuereinheit 24 nicht nur mit einem Temperaturfühler 28, sondern - wie in Figur 3 gezeigt - auch mit einem entsprechenden Sollwertgeber 30, z. B. einer Tastatur oder einem Drehknopf, gekoppelt, mittels welcher der Anwender des Verfahrens bzw. der Benutzer der Regelvorrichtung eine von ihm gewünschte Temperatur einstellen kann. Ferner wird zweckmäßigerweise ein Speicher 32 vorgesehen, auf den die zentrale Auswerte- und Steuereinheit 24 sowohl zum Ablegen von Daten als auch zum Abrufen von Daten zugreifen kann. In einem solchen Speicher können z. B. zu verschiedenen, gerade nicht eingestellten Temperatursollwerten mögliche optimale Ein- und Ausschaltzeitpunkte abgelegt sein. Je nach Art und Ausgestaltung des Ventils 22 wird in der Praxis zwischen zentraler Auswerte- und Steuereinheit 24 und Ventil 22 noch eine Schaltstufe 34 geschaltet, welche die von der zentralen Auswerte- und Steuereinheit 24 erzeugten Steuersignale in eine mechanische Bewegung des Ventils 22 umsetzt. Dabei ist es auch möglich - wie in Figur 4 gezeigt - zwischen der das Ventil bewegenden Schaltstufe 34 und der zentralen Auswerte-und Steuereinheit 24 zwei Sender-Empfänger-Einheiten 36 und 38 vorzusehen, mittels welcher die von der zentralen Auswerte- und Steuereinheit 24 erzeugten und von der Schaltstufe 34 umgesetzten Steuersignale drahtlos oder drahtgebunden übermittelt werden.

## Patentansprüche

1. Verfahren zum Einstellen einer Temperiereinrichtung, insbesondere einer Warmwasserheizanlage, mit mehreren von einem Heiz- oder Kühlmittel durchströmten Wärmeübertragungsvorrichtungen, umfassend folgende Schritte:
- Ermitteln eines Heiz- bzw. Kühlmittel-Volumenstromwertes für jede Wärmeübertragungsvorrichtung mit der Vorgabe, dass jedes zu temperierende Objekt die gleiche spezifische Energiezufuhr erfahren soll; und
- Einstellen der Volumenströme auf die ermittelten Werte,
dudurch gekennzeichnet, dass die Heiz- bzw. Kühlmittel-Volumenstromwerte aus Informationen berechnet werden, die auf einem thermozyklischen Regelverfahren basieren, bei dem für jede Wärmeübertragungsvorrichtung das Verhältnis von Pulsdauern, in denen das Objekt temperiert wird, zu Pausendauern, in denen nicht temperiert wird, als Maß für den Energiebedarf des Objekts berücksichtigt wird.

2. Verfahren nach Anspruch 1, **dadurch gekennzeichnet, dass** für jede Wärmeübertragungsvorrichtung ein auf einen Referenzwert bezogener, relativer Volumenstromwert ermittelt wird.

3. Verfahren nach Anspruch 1 oder 2, **dadurch gekennzeichnet, dass** bei der Berechnung der Volumenstromwerte basierend auf dem thermozyklischen Regelverfahren für jedes Objekt eine Differenz zwischen einer gewünschten Temperatur und einer Heiz- bzw. Kühlmitteltemperatur ermittelt wird, die mindestens notwendig ist, um das Objekt auf der gewünschten Temperatur zu halten.

4. Verfahren nach Anspruch 3, **dadurch gekennzeichnet, dass** das thermozyklische Regelverfahren vorsieht, die Wärmeübertragungsvorrichtungen zur Erzeugung von Temperaturschwingungen um den gewünschten Temperaturwert periodisch ein- und auszuschalten.

5. Verfahren nach Anspruch 4, **dadurch gekennzeichnet, dass** das thermozyklische Regelverfahren für jedes Objekt zwei Sollwerte vorgibt, die die maximale Amplitude der Schwingungen um den gewünschten Temperaturwert für das entsprechende Objekt markieren.

6. Verfahren nach Anspruch 4 oder 5, **dadurch gekennzeichnet, dass** die Reaktion der Objekte auf ein Heizen oder Kühlen automatisch erfasst und für folgende Betriebsoperationen der Heiz- oder Kühlanlage berücksichtigt wird, um optimale Ein- und Ausschaltzeitpunkte für die Wärmeübertragungsvorrichtungen zu ermitteln.

7. Verfahren nach einem der vorhergehenden Ansprüche, **dadurch gekennzeichnet, dass** zum Einstellen der Volumenströme auf die ermittelten Werte von den Wärmeübertragungsvorrichtungen unabhängige Ventile oder Drosselvorrichtungen verwendet werden, die manuell oder automatisch mithilfe einer zentralen Auswerte- und Steuereinheit eingestellt werden.

8. Verfahren nach einem der Ansprüche 1 bis 6, **dadurch gekennzeichnet, dass** zum Einstellen der Volumenströme auf die ermittelten Werte an den Wärmeübertragungsvorrichtungen vorgesehene proportionale Ventile oder Drosselvorrichtungen verwendet werden, die vorzugsweise automatisch mithilfe einer zentralen Auswerte- und Steuereinheit eingestellt werden.

9. Verfahren nach einem der Ansprüche 1 bis 6, **dadurch gekennzeichnet, dass** zum Einstellen der Volumenströme auf die ermittelten Werte an den Wärmeübertragungsvorrichtungen vorgesehene Ventile oder Drosselvorrichtungen verwendet werden und die Berechnung von Zeitdauern, in denen die Ventile bzw. Drosselvorrichtungen geöffnet und/oder geschlossen sind, auf einer Pulsweitenmodulation beruhen.

10. Vorrichtung zur Durchführung des Verfahrens nach einem der vorhergehenden Ansprüche, umfassend:
- eine Temperiereinrichtung, mit
- einer Wärmequelle (12) bzw. Wärmesenke, und
- mehreren von einem Heiz- oder Kühlmittel durchströmten Wärmeübertragungsvorrichtungen (16), wobei für jede Wärmeübertragungsvorrichtung (16) ein Ventil (22) oder eine Drosselvorrichtung vorgesehen ist, das bzw. die den Zufluss des Heiz- oder Kühlmittels beeinflusst; sowie
- eine zentrale Auswerte- und Steuereinheit (24), mithilfe derer die Ventile (22) bzw. Drosselvorrichtungen auf die ermittelten Volumenstromwerte eingestellt werden.

11. Vorrichtung nach Anspruch 10, **dadurch gekennzeichnet, dass** die Ventile (22) bzw. Drosselvorrichtungen von der zentralen Auswerte- und Steuereinheit (24) ansteuerbare Stellantriebe aufweisen.

12. Vorrichtung nach Anspruch 10 oder 11, **dadurch gekennzeichnet, dass** die Ventile (22) bzw. Drosselvorrichtungen nur die beiden Schaltzustände "Auf" und "Zu" besitzen.

13. Vorrichtung nach einem der Ansprüche 10 bis 12, **dadurch gekennzeichnet, dass** zentrale Auswerte- und Steuereinheit (24) so ausgelegt ist, dass sie die Zeitdauern, in denen die Ventile (22) bzw. Drosselvorrichtungen geöffnet sind, basierend auf einer Pulsweitenmodulation einstellt.

14. Vorrichtung nach Anspruch 10 oder 11, **dadurch gekennzeichnet, dass** die Ventile (22) bzw. Drosselvorrichtungen an den Wärmeübertragungsvorrichtungen angebrachte, proportional einstellbare Ventile (22) bzw. Drosselvorrichtungen sind.

## Claims

1. A method of setting a temperature control system, in particular a hot water heating system, having a plurality of heat transfer devices through which a heating or cooling agent flows, the method comprising the following steps:
- establishing a heating or cooling agent volume flow value for each heat transfer device with the specification that each object to be temperature-controlled is to experience the same specific energy supply; and
- adjusting the volume flows to the established values,
**characterized in that** the heating or cooling agent volume flow values are calculated from information based on a thermocyclic control process in which for each heat transfer device, the ratio of pulse durations in which the object is temperature-controlled, to pause durations in which the temperature is not controlled is taken into account as a measure for the energy demand of the object.

2. The method according to claim 1, **characterized in that** for each heat transfer device, a relative volume flow value relating to a reference value is established.

3. The method according to claim 1 or 2, **characterized in that** the calculation of the volume flow values based on the thermocyclic control process includes determining, for each object, a difference between a desired temperature and a heating or cooling agent temperature which is at least necessary to keep the object at the desired temperature.

4. The method according to claim 3, **characterized in that** the thermocyclic control process provides for the heat transfer devices to be periodically switched ON and OFF to generate temperature oscillations about the desired temperature value.

5. The method according to claim 4, **characterized in that** for each object, the thermocyclic control process specifies two setpoint values which mark the maximum amplitude of the oscillations about the desired temperature value for the respective object.

6. The method according to claim 4 or 5, **characterized in that** the response of the objects to a heating or cooling is automatically detected and taken into account for subsequent operational activities of the heating or cooling system in order to establish optimum ON and OFF switching points in time for the heat transfer devices.

7. The method according to any of the preceding claims, **characterized in that** for adjusting the volume flows to the established values, valves or throttle devices are used which are independent of the heat transfer devices and which are set manually or automatically with the aid of a central evaluation/control unit.

8. The method according to any of claims 1 to 6, **characterized in that** for adjusting the volume flows to the established values, proportional valves or throttle devices are used which are provided on the heat transfer devices and which are preferably set automatically with the aid of a central evaluation/control unit.

9. The method according to any of claims 1 to 6, **characterized in that** for adjusting the volume flows to the established values, valves or throttle devices are used which are provided on the heat transfer devices, and that the calculation of time periods in which the valves or throttle devices are open and/or closed is based on a pulse width modulation.

10. A device for carrying out the method according to any of the preceding claims, comprising:
- a temperature control system including
- a heat source (12) or a heat sink, and
- a plurality of heat transfer devices (16) through which a heating or cooling agent flows, a valve (22) or a throttle device being provided for each heat transfer device (16), which influences the inflow of the heating or cooling agent; and
- a central evaluation/control unit (24) with the aid of which the valves (22) or throttle devices are adjusted to the established volume flow values.

11. The device according to claim 10, **characterized in that** the valves (22) or throttle devices include actuators that are adapted to be driven by the central evaluation/control unit (24).

12. The device according to claim 10 or 11, **characterized in that** the valves (22) or throttle devices only have two switching conditions, "open" and "close".

13. The device according to any of claims 10 to 12, **characterized in that** the central evaluation/control unit (24) is designed to set the time periods in which the valves (22) or throttle devices are open on the basis of a pulse width modulation.

14. The device according to claim 10 or 11, **characterized in that** the valves (22) or throttle devices are proportionally adjustable valves (22) or throttle devices mounted to the heat transfer devices.

## Revendications

1. Procédé de réglage d'un moyen de régulation de température, en particulier d'une installation de chauffage d'eau chaude qui présente plusieurs dispositifs de transfert de chaleur parcourus par un agent chauffant ou réfrigérant, comportant les étapes suivantes :
- détermination d'une valeur de débit volumétrique d'agent chauffant ou réfrigérant pour chaque dispositif de transfert de chaleur avec la spécification que chaque objet dont la température doit être régulée doit être soumis à la même alimentation en énergie spécifique, et
- réglage des débits volumétriques aux valeurs déterminées,
**caractérisé en ce que** les valeurs de débit volumétrique d'agent chauffant ou réfrigérant sont calculées à partir d'informations basées sur un procédé de régulation thermocyclique dans lequel le rapport entre des durées d'impulsion durant lesquelles la température de l'objet est régulée, et des durées de pause durant lesquelles il n'y a pas de régulation de température, est pris en compte en tant que grandeur pour le besoin énergétique de l'objet pour chaque dispositif de transfert de chaleur.

2. Procédé selon la revendication 1, **caractérisé en ce qu'**une valeur de débit volumétrique relative se rapportant à une valeur de référence est déterminée pour chaque dispositif de transfert de chaleur.

3. Procédé selon la revendication 1 ou 2, **caractérisé en ce que** lors du calcul des valeurs de débit volumétrique sur la base du procédé de régulation thermocyclique, une différence entre une température souhaitée et une température d'agent chauffant ou réfrigérant au moins nécessaire pour maintenir l'objet à la température souhaitée est déterminée pour chaque objet.

4. Procédé selon la revendication 3, **caractérisé en ce que** le procédé de régulation thermocyclique prévoit la mise en marche et l'arrêt périodique des dispositifs de transfert de chaleur pour générer des oscillations de température autour de la valeur de température souhaitée.

5. Procédé selon la revendication 4, **caractérisé en ce que** le procédé de régulation thermocyclique fixe deux valeurs de consigne pour chaque objet, lesquelles marquent l'amplitude maximale des oscillations autour de la valeur de température souhaitée pour l'objet correspondant.

6. Procédé selon la revendication 4 ou 5, **caractérisé en ce que** la réaction des objets à un chauffage ou un refroidissement est automatiquement détectée et est prise en compte pour des opérations de service subséquentes de l'installation de chauffage ou de refroidissement pour déterminer des moments de mise en marche et d'arrêt optimaux pour les dispositifs de transfert de chaleur.

7. Procédé selon l'une des revendications précédentes, **caractérisé en ce que** pour le réglage des débits volumétriques aux valeurs déterminés, on utilise des vannes ou des dispositifs d'étranglement qui sont indépendant(e)s des dispositifs de transfert de chaleur et sont réglé(e)s manuellement ou automatiquement à l'aide d'une unité d'évaluation et de commande centrale.

8. Procédé selon l'une des revendications 1 à 6, **caractérisé en ce que** pour le réglage des débits volumétriques aux valeurs déterminées, on utilise des vannes proportionnelles ou des dispositifs d'étranglement proportionnels qui sont prévus sur les dispositifs de transfert de chaleur et sont de préférence réglé(e)s de manière automatique à l'aide d'une unité d'évaluation et de commande centrale.

9. Procédé selon l'une des revendications 1 à 6, caractérisé que pour le réglage des débits volumétriques aux valeurs déterminées, des vannes ou des dispositifs d'étranglement prévu(e)s sur les dispositifs de transfert de chaleur sont utilisés, et en ce que le calcul de durées pendant lesquelles les vannes ou les dispositifs d'étranglement sont ouvert(e)s et/ou fermé(e)s se base sur une modulation d'impulsions en largeur.

10. Dispositif pour l'exécution du procédé selon l'une des revendications précédentes, comportant :
- un moyen de régulation de température qui présente
- une source de chaleur (12) ou un puits thermique et
- plusieurs dispositifs de transfert de chaleur (16) parcourus par un agent chauffant ou réfrigérant, une vanne (22) ou un dispositif d'étranglement qui influence l'arrivée de l'agent chauffant ou réfrigérant étant prévu(e) pour chaque dispositif de transfert de chaleur (16), et
- une unité d'évaluation et de commande centrale (24) au moyen de laquelle les vannes (22) ou dispositifs d'étranglement sont réglé(e)s aux valeurs de débit volumétrique déterminées.

11. Dispositif selon la revendication 10, **caractérisé en ce que** les vannes (22) ou dispositifs d'étranglement présentent des mécanismes de commande aptes à être commandés par l'unité d'évaluation et de commande centrale (24).

12. Dispositif selon la revendication 10 ou 11, **caractérisé en ce que** les vannes (22) ou dispositifs d'étranglement possèdent uniquement les deux états de commutation « ouvert » et « fermé ».

13. Dispositif selon l'une des revendications 10 à 12, **caractérisé en ce que** l'unité d'évaluation et de commande centrale (24) est réalisée de manière à régler les durées pendant lesquelles les vannes (22) ou dispositifs d'étranglement sont ouverts, sur la base d'une modulation d'impulsions en largeur.

14. Dispositif selon la revendication 10 ou 11, **caractérisé en ce que** les vannes (22) ou dispositifs d'étranglement sont des vannes (22) ou des dispositifs d'étranglement réglables de manière proportionnelle agencés sur les dispositif de transfert de chaleur.
